# EUROPÄISCHE PATENTSCHRIFT

(11) **EP 1 178 762 B1**
(45) Veröffentlichungstag und Bekanntmachung des Hinweises auf die Patenterteilung: **02.05.2003**
(21) Anmeldenummer: 99968615.7
(22) Anmeldetag: 07.09.1999
(51) Int. Cl.: A61C 15/04

(54) **ZAHNSEIDENHALTER**
DENTAL FLOSS HOLDER
PORTE-FIL DENTAIRE

(30) Priorität: 07.09.1998 DE 19840773
(43) Veröffentlichungstag der Anmeldung: 13.02.2002
(73) Patentinhaber: Djamchidi, Cepand, 12247 Berlin (DE)
(72) Erfinder: Djamchidi, Cepand, 12247 Berlin (DE)
(74) Vertreter: Held, Stephan, Dr.rer.nat., Dipl.-Chem.
(86) Internationale Anmeldenummer: EP9906573
(87) Internationale Veröffentlichungsnummer: WO00013607

(56) Entgegenhaltungen:
- DE-A- 4 342 832
- US-A- 4 518 000
- US-A- 5 375 615

## Beschreibung

Die vorliegende Erfindung betrifft einen Zahnseidenhalter, der als Zahnreinigungsinstrument der Reinigung dentaler Approximalflächen dient und die Säuberung mittels Dentalseide oder dergleichen bewirkt, und insbesondere bei festsitzenden Zahnregulierungsapparaturen angewendet werden kann.

Zahnseide wird verwendet, um Essensreste und Zahnbeläge von der Zahnoberfläche und den Zahnzwischenräumen zu entfernen, indem die Seide zwischen zwei Zähnen von okklusal nach zervikal eingeführt und entlang der Zahnoberflächen bewegt wird. Dies ist eine wirksame Reinigungsmaßnahme als Ergänzung zur Zahnsäuberung mit Zahnbürsten, die die approximalen Zahnflächen nicht zu reinigen vermögen. Zahnseideanwendung verhütet somit approximale Karies und Entzündungen des marginalen Parodonts.

Bei kieferorthopädischer Behandlung mit festsitzenden Apparaturen, sogenannten Multiband- oder Multibracketapparaturen, verhindert der eingesetzte Drahtbogen das Überwinden des approximalen Kontaktpunktes mit Zahnseide, sofern diese mit den Fingern gehalten oder konventionelle Zahnseidehalter verwendet werden.

Es gibt Zahnseiden mit einem verstärkten, steifen Ende, die das Einfädeln unter dem Drahtbogen erleichtern sollen. Deren Anwendung ist jedoch äußerst zeitaufwendig, erfordert eine überdurchschnittliche Geschicklichkeit des Anwenders und ist insbesondere bei den hinteren Backenzähnen kaum anwendbar.

Konventionelle Zahnseidenhalter lassen sich bei Multibandapparaturen nicht anwenden, da zwischen Zahnoberfläche und Papille einerseits sowie Drahtbogen andererseits nicht genügend Platz zur Verfügung steht, um sie einführen zu können. Der in der US 5 101 843 beschriebene Halter weist nach zervikal divergierende zierliche Füßchen auf und kann auch im Zusammenhang mit Multibandapparaturen eingesetzt werden. Dabei handelt es sich jedoch um ein Einwegprodukt, das infolge eines zu kleinen instabilen Griffs im Seitenzahngebiet nicht angewendet werden kann und leicht bei der Benutzung zerbricht.

Des weiteren ist aus der DE 195 17 611 C1 ein Zahnseidenhalter bekannt, der ein längliches Griffteil aufweist, das an seinem einen Ende mit einer Haltegabel und an seinem anderen Ende mit einer Spulenkammer zur Aufnahme einer Zahnseidespule verbunden ist. Die Zahnseide verläuft von der Spule über eine Rille im Griffteil zu der Haltegabel. Dieser bekannte Zahnseidenhalter hat jedoch den Nachteil, daß er sehr unbequem zu handhaben ist, da sich das längliche Griffteil zwischen Haltegabel und Spulenkammer befindet.

Ein Zahnseiden halter gemäß dem Oberbegriff von Anspruch 1 ist aus der US-A-5 375 615 bekannt.

Aufgabe der vorliegenden Erfindung ist es, einen Zahnseidenhalter zur Reinigung von Approximalflächen mittels Zahnseide zu schaffen, der auch bei Patienten mit Multibandapparaturen bequem angewendet werden kann, der die Interdentalpapillen nicht verletzt und auch in den hinteren Zahnbogenabschnitten ohne Spiegel anwendbar ist und der leicht handhabbar ist.

Erfindungsgemäß wird diese Aufgabe durch einen Zahnseidenhalter nach Anspruch 1 gelöst.

Da das Griffstück sowohl dem Halten des Zahnseidenhalters von Hand als auch der Aufnahme einer Zahnseidespule dient, ist es möglich, den erfindungsgemäßen Zahnseidenhalter mit geringer Länge herzustellen, so daß er bequem zu handhaben ist. Er kann auch bei Patienten mit Multibandapparaturen verwendet werden. Gerade im Bereich der Mundhygiene ist ein Gerät mit geringen Abmessungen von großem Vorteil, da die menschliche Mundhöhle nur einen begrenzten Raum zur Betätigung derartiger Geräte bietet. Durch die tropfenförmige Ausgestaltung des Griffstücks wird eine ergonomische Halteeinrichtung geschaffen, die auch Laien eine sichere Verwendung des erfindungsgemäßen Zahnseidenhalters ermöglicht.

Zwischen den Zinken der Gabel des erfindungsgemäßen Zahnseidenhalters wird bei der Verwendung desselben die von der eingesetzten Zahnseidespule kommende Zahnseide mittels des mindestens einen Halteelements zur Befestigung gespannt. Wenn nur ein Halteelement vorgesehen ist, werden der von der Spule kommende Zahnseidestrang und der von der Gabel zurücklaufende Zahnseidenstrang gemeinsam befestigt. Es können jedoch auch mehrere, insbesondere zwei, Halteelemente vorhanden sein, um die von der Spule kommende Zahnseide und die von der Gabel zurückkommende Zahnseide getrennt voneinander zu befestigten. Die Befestigung kann beispielsweise durch Einklemmen der Zahnseide erfolgen.

Das Halteelement ist erfindungsgemäß auf dem Arm des Zahnseidenhalters angebracht, der das Griffstück mit der Gabel verbindet. Der Arm des Zahnseidenhalters kann sehr kurz sein, d.h eine sehr geringe Länge aufweisen, da er im westlichen nur der Anbringung des bzw. der Halteelemente dient. Die geringe Länge des Armes ist zum einen aus Gründen der praktischen Handhabung des Zahnseidenhalters, wie bereits vorstehend erläutert, und zum anderen unter hygienischen Gesichtspunkten wünschenswert, da die Zahnseide auf der Oberfläche des Armes geführt wird und deshalb freigelegt ist. Als besonders geeignet hat sich in diesem Zusammenhang eine Länge von etwa 0 bis etwa 7 cm erwiesen.

Vorzugsweise ist das Griffstück als Schalenkonstruktion ausgebildet. Zur Bedienerfreundlichkeit des erfindungsgemäßen Zahnseidenhalters trägt auch die Schalenkonstruktion des Griffstücks bei, da hierdurch eine Gewichtsersparnis erzielt wird, was zur Folge hat, daß die Verwendung des Zahnseidenhalters nicht zur Ermüdung der Hand des Benutzers führt, wenn dieser eine sorgfältige und somit möglicherweise länger dauernde Reinigung der Zähne bzw. Zahnzwischenräume durchführt. Der genannte Vorteil wirkt sich insbesondere bei Kindern auf deren Akzeptanz des Zahnseidenhalters günstig aus.

Gemäß einer besonders bevorzugten Ausführungsform beträgt der Durchmesser des tropfenförmigen Grifftstücks etwa 3 bis etwa 7 cm. Mit dem Ausdruck "Durchmesser des tropfenförmigen Griffstücks" ist im vorliegenden Fall der Durchmesser desjenigen Teils des tropfenförmigen Griffstücks gemeint, der einen im wesentlichen kreisförmigen Querschnitt aufweist. Mit der angegebenen Größe des Griffstücks wird eine besonders komfortable Handhabung des Zahnseidenhalters gewährleistet, da sie etwa der Größe der von der menschlichen Hand bequem zu umgreifenden Fläche entspricht. Falls jedoch ein Zahnseidenhalter für spezielle Personengruppen, beispielsweise für kleine Kinder, geschaffen werden soll, so kann die Größe des Griffstücks entsprechend variiert werden, um das Produkt der speziellen Zielgruppe anzupassen. In ein Griffstück, dessen Größe im angegebenen Bereich liegt, können auch voluminöse Zahnseidespulen eingesetzt werden, so daß ein häufiges Auswechseln bzw. Ersetzen der Spule entfällt. Mit anderen Worten können in das Griffstück des erfindungsgemäßen Zahnseidenhalters Spulen nahezu jeder beliebigen Größe integriert werden.

Vorzugsweise weisen die Zinken der Gabel an ihrem Ende einen Querschnitt von etwa 1 bis etwa 3 mm² auf. Das heißt, daß die Zinken sehr filigran ausgestaltet sind.

Die Zinken der Gabel sind des weiteren vorzugsweise gegenüber der Längsachse des Zahnseidenhalters nach unten und nach außen abgewinkelt. Dies bedeutet in der Praxis, daß die Zinken nach oral und vestibulär divergieren. Durch diese Ausgestaltung wird eine ausreichend große Reinigungszone geschaffen, wobei jedoch die gesamte Abmessung der Gabel relativ gering ist. Um die Verletzungsgefahr zu minimieren, haben die Zinken der Gabel abgerundete Enden. Auf diese Weise wird der Komfort und die Sicherheit bei der Reinigung der Zahnzwischenräume zusätzlich erhöht. Durch die Kombination mit dem Griffstück kann der Zahnseidenhalter auch im Molarenbereich angewendet werden.

Die Schalenkonstruktion des Griffstücks kann verwirklicht werden, indem das Griffstück zwei Teile aufweist, wobei der erste Teil schalenförmig und der zweite Teil als lösbarer oder abklappbarer Deckel ausgebildet ist. Auf diese Weise ist die Zahnseidespule gegenüber äußeren Einflüssen, wie z. B. Verunreinigungen geschützt.

Zum sicheren Halten der eingesetzten Zahnseidespule kann im Griffstück ein Stempel ausgebildet sein, der sich im wesentlichen senkrecht zur Längsachse des Zahnseidenhalters erstreckt. Mit "Stempel" ist hier jedes längliche Element zu verstehen, auf das eine Zahnseidespule mit einer zentrischen Öffnung aufgesteckt werden kann.

Gemäß einer weiteren Ausführungsform ist das Griffstück mit einem federnd gelagerten Mechanismus zur Arretierung versehen, wobei der Mechanismus zur Arretierung einen Zapfen aufweist, der durch Druck zum Lösen der Arretierung betätigbar ist. Bei dieser Ausführungsform wird die von der Zahnseidespule kommende Zahnseide zunächst über die Zinken der Gabel geführt, und nur die von der Gabel aus zurücklaufende Zahnseide wird am Halteelement befestigt. Auf diese Weise wird die für den Reinigungsprozeß notwendige Spannung des Fadens gewährleistet. Durch Ausüben eines Druckes auf den Zapfen des Mechanismus wird die Arretierung gelöst, und die Zahnseide kann von der Spule abgezogen und dann erneut durch Loslassen des Zapfens fixiert werden. Auf diese Weise kann jeweils ein "frisches" Zahnseidestück in die Reinigungszone gebracht werden.

Die federnde Lagerung kann durch ein Federelement verwirklicht sein, wobei das Griffstück vorzugsweise Sicherungselemente zum Verhindern des Herausspringens des Federelements aufweist.

Vorzugsweise ist der erfindungsgemäße Zahnseidenhalter mit einer Schneidvorrichtung zum Abschneiden der verbrauchten Zahnseide versehen. Auf diese Weise kann die von der Gabel zurücklaufende Zahnseide, die bereits die Reinigungszone passiert hat und somit zur Zahnreinigung verwendet wurde, bequem abgetrennt werden.

In den Zeichnungen ist ein Ausführungsbeispiel der Erfindung dargestellt und wird im folgenden näher beschrieben. Von diesen zeigt:
Fig. 1 eine erste Ausführungsform eines erfindungsgemäßen Zahnseidenhalters für Zahnseide in Draufsicht
Fig. 2 den Zahnseidenhalter von Figur 1 in Seitenansicht und
Fig. 3 eine Rückansicht des Griffstücks mit eingelegter Seidenvorratsspule einer zweiten Ausführungsform des erfindungsgemäßen Zahnseidenhalters im Querschnitt.

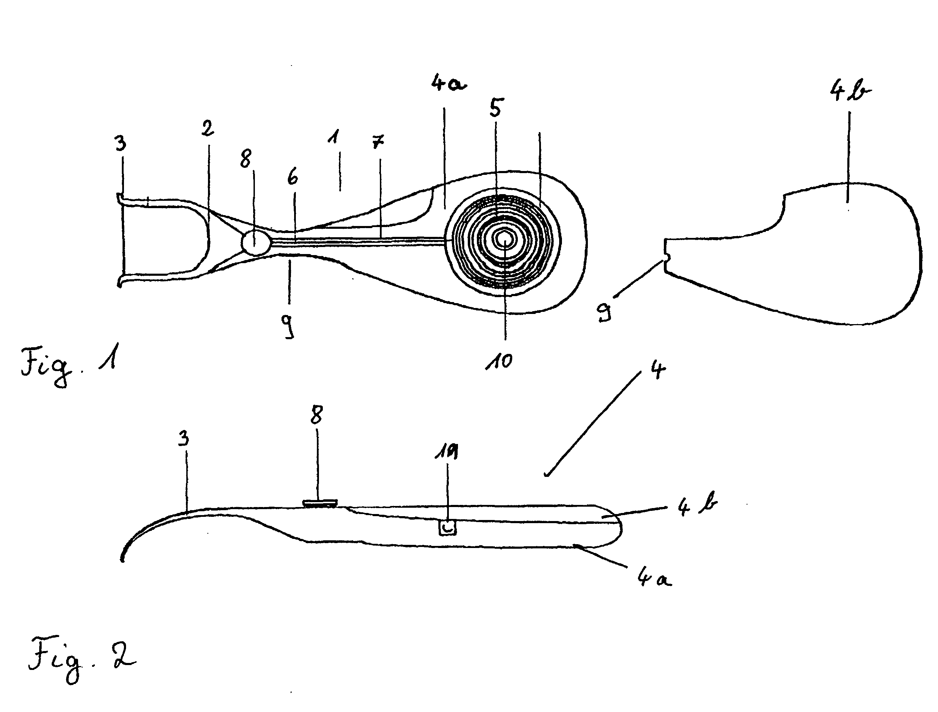

In Figur 1 ist in Draufsicht eine erste Ausführungsform des erfindungsgemäßen Zahnseidenhalters gezeigt, der in seiner Gesamtheit mit dem Bezugszeichen 1 gekennzeichnet ist. Der Zahnseidenhalter 1 weist an seinem vorderen Ende eine Gabel 2 auf, die im wesentlichen aus zwei Zinken 3 besteht, welche nach unten (in dieser Darstellung nicht sichtbar) und zur Seite hin abgewinkelt sind. Diese Anordnung der Gabel 2 erleichtert die Reinigung der Seitenzähne erheblich. Zwischen den Zinken 3 der Gabel 2 erstreckt sich die Reinigungszone, in der die Zahnseide im wesentlichen senkrecht zur Längsachse des Zahnseidenhalters verläuft, wie dies in der Darstellung zu sehen ist. Die an den Enden abgerundeten Zinken 3 verhindern zum einen Verletzungen am marginalen Parodont und sichern die Zahnseide durch eine Kerbe oder dergleichen in ihrer Position.

Das hintere Ende des Zahnseidenhalters wird durch ein Griffstück 4 gebildet, das hier aus einem ersten Teil 4a, der als schalenförmiger Boden ausgebildet ist, und einem zweiten Teil 4b, der als lösbarer oder aufklappbarer Deckel ausgestaltet sein kann, besteht. In die schalenförmige Vertiefung des ersten Teils 4a des Griffstücks 4 wird bei der Benutzung des erfindungsgemäßen Zahnseidenhalters 1 eine Zahnseidespule 5 eingelegt. Bei der in dieser Figur dargestellten Ausrührungsform wird die von der Spule 5 abgezogene Zahnseide 6 über eine Führung 7 einem Halteelement 8 zugeführt, mittels dessen die für den Zahnreinigungsprozess notwendige Spannung in der Zahnseide 6 erzeugt werden kann. Das Halteelement 8 kann beispielsweise als Klemmeinrichtung ausgebildet sein, die in eine Bohrung oder Nut des Zahnseidenhalters eingefügt ist. In der dargestellten Ausführungsform ist das Halteelement 8 an einem Arm 9 angebracht, der die Gabel 2 mit dem Griffstück 4 verbindet.

Der Arm 9 selbst ist vorzugsweise sehr kurz ausgeführt, damit zwischen Gabel 2 und Griffstück 4 kein langer Hebel besteht. Die Ausgestaltung des Zahnseidenhalters mit nur einem sehr kurzen Arm 9 weist zusätzlich zu den schon erwähnten Vorteilen auch den Vorzug auf, daß für jeden Säuberungsprozeß nur eine geringfügige Länge an Zahnseide benötigt wird, da der für die Zahnseide zurückzulegende Weg von der Spule bis zu der Gabel kurz ist.

Die Führung 7 kann als Vertiefung oder Nut innerhalb des Griffstücks 4 und gegebenenfalls auf dem Arm 9 oder innerhalb desselben ausgebildet sein, die im westlichen entlang der Längsachse des Zahnseidenhalters verläuft. Zum Schutz der Spule 5 sowie der Zahnseide 6 gegen Verschmutzungen ist der Deckel vorzugsweise so ausgestaltet, daß er, wenn er aufgesetzt ist, den ersten schalenförmigen Teil 4a des Griffstücks 4 und die im Griffstück befindliche Führung 7 im wesentlichen vollständig bedeckt. Wenn die Führung 7 für die Zahnseide 6 an derjenigen Stelle, an der der Deckel ihren Verlauf kreuzt, auf der Oberseite des ersten schalenförmigen Teils des Griffstücks verläuft, muß der Deckel, wie dies hier gezeigt ist, an dieser Stelle eine Einkerbung 9 aufweisen, um den Lauf der Zahnseide nicht zu behindern.

Vom Halteelement 8 aus verläuft die Zahnseide 6 über den ersten Zinken quer zur Längsachse des Zahnseidenhalters zum zweiten Zinken und zurück zum Halteelement 8, das die zur Anwendung notwendige Spannung gewährleistet. Zur sicheren Führung der Zahnseide entlang der Zinken können diese mit Einkerbungen bzw. Führungsnuten oder dergleichen für die Zahnseide versehen sein.

Im einfachsten Fall kann das Halteelement 8, wie gezeigt, als knopfförmiges Element ausgebildet sein, auf dem die Zahnseide 6 durch einfaches Umwickeln befestigt ist. Der zwischen den Zinken 3 befindliche Raum bildet die Reinigungszone des erfindungsgemäßen Zahnseidenhalters.

Um die Zahnseidespule sicher innerhalb des Griffstücks 4 befestigen und zentrieren zu können, kann in einem Teil, hier im ersten, unteren Teil 4a, des Griffstücks 4 ein Stempel 10 angebracht sein. Durch diese Ausgestaltung wird es ermöglicht, auch Spulen 5, die wesentlich kleiner als die zur Aufnahme der Spule vorgesehene Vertiefung sind, so innerhalb der Vertiefung zu positionieren, daß sie nicht verrutschen können.

In Figur 2 ist als weiteres Detail des erfindungsgemäßen Zahnseidenhalters 1 eine Schneidvorrichtung 11 gezeigt, die hier am seitlichen Rand des ersten Teils 4a des Griffstücks 4 angebracht ist und die dazu dient, die gebrauchte Zahnseide unmittelbar nach Gebrauch abzutrennen. Anders als in der dargestellten Ausführungsform gezeigt, ist es auch möglich, die Schneidvorrichtung 11 in das Halteelement 8 zu integrieren, so daß überstehende Teile des Fadens, d.h. der Zahnseide, sofort abgetrennt werden können. Die Schneidvorrichtung 11 sollte, ganz gleich, wo sie angebracht wird, versenkt angeordnet sein, um beim Gebrauch Verletzungen zu verhindern.

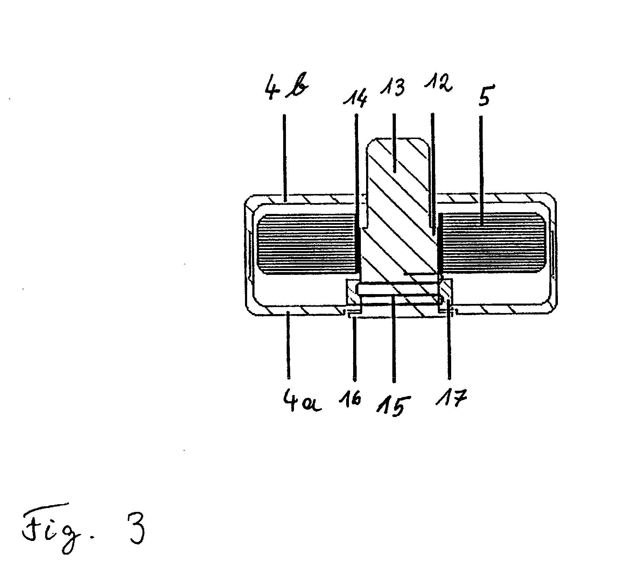

In Figur 3 ist ein Querschnitt durch das Griffstück 4 einer zweiten Ausführungsform des erfindungsgemäßen Zahnseidenhalters 1 gezeigt. Das Griffstück 4 besteht auch hier aus einem ersten, unteren Teil 4a, der im wesentlichen schalenförmig ausgebildet ist, und einem oberen Teil 4b. Das Griffstück 4 ist hier in geschlossenem Zustand gezeigt, d.h., daß der zweite Teil 4b bzw. Deckel, der hier ebenfalls schalenförmig ausgestaltet ist, auf den unteren Teil 4a aufgesetzt ist. Diese Ausführungsform weist einen Mechanismus zur Arretierung auf, der in seiner Gesamtheit mit dem Bezugszeichen 12 gekennzeichnet ist.

Der Mechanismus 12 zur Arretierung besteht hier aus einem im unteren Teil 4a zentrisch federnd gelagertem Stempel 13, der durch Druck zum Lösen der Arretierung betätigbar ist. Der Stempel 13 steht zu diesem Zweck durch eine Öffnung oder Bohrung im Deckel des Griffstücks über diesen hinaus vor. Wie dies in der Figur gezeigt ist, ist der Stempel 13 gegen sein unteres Ende hin erweitert. Diese Erweiterung dient dem Feststecken eines Zahnseidespulenhalters 14, auf der die Zahnseidespule 5 gelagert ist.

Der Stempel 13 kann durch ein Federelement 15, das hier als einfache Spiralfeder dargestellt ist, im unteren Teil 4a des Griffstücks 4 gelagert werden. Ein durch das Federelement 15 möglicherweise ausgelöstes Herausspringen des Stempels 13, wenn der obere Teil des Griffstücks 4 abgenommen ist, wird durch ein oder mehrere Sicherungselemente 16 verhindert. Die Sicherungselemente 16 sind in der gezeigten Ausführungsform durch eine tellerartige Ausstülpung des Stempels 13 gebildet, die außerhalb des unteren Teils 4a des Griffstücks 4 an diesem anliegen.

Wenn von einer Zahnseidespule 5 Zahnseide 6 abgezogen werden soll, so wird der Stempel 13 gegen die Federkraft nach unten gedrückt so daß er sich entlang eines Rotationsschutzes 17, welcher verhindert, daß die Zahnseidenspule in arretierter Stellung rotiert, nach unten bewegt. Dabei löst sich der Zahnseidespulenhalter 14 vom erweiterten Teil des Stempels 13, so daß er frei rotieren und Zahnseide von der Spule 5 abgewickelt werden kann. Wenn genügend Zahnseide abgezogen worden ist, wird der Stempel 13 wieder freigegeben, so daß er sich unter der Wirkung des Federelements 15 solange nach oben bewegt, wie dies die Sicherungselemente 16 erlauben. Beim Gleiten des Stempels 13 nach oben greift sein erweitertes Ende wieder in den Zahnseidespulenhalter 14 ein, wodurch die Spule 5 erneut arretiert wird.

Gemäß einer weiteren, nicht gezeigten Ausführungsform weist der Stempel 13 zwei Zapfen (Matrizen) auf, auf die eine mit zwei Kerben oder Aussparungen (Patrizen) versehene Zahnseiderolle geschoben wird, so daß die Rolle nicht selbständig rotiert, ohne daß der Stempel gelöst ist.

Der erfindungsgemäße Zahnseidenhalter kann mit Mitteln versehen sein, um die Zahnseide in hochfrequente Schwingungen zu versetzen. Hierdurch kann die Reinigungswirkung verbessert und insbesondere bei Patienten mit Bändern und Brackets das Überwinden des Kontaktpunktes erleichtert werden.

## Patentansprüche

1. Zahnseidenhalter (1), aufweisend ein Griffstück (4), in das eine Seidenvorratsspule einsetzbar ist, eine Gabel (2) mit zwei Zinken (3), zwischen denen eine Zahnseide spannbar ist, sowie mindestens ein Halteelement (8) zur Arretierung der Zahnseide, wobei das Griffstück (4) im wesentlichen tropfenförmig ausgebildet ist und das Griffstück (4) mit der Gabel (2) über einen Arm (9) verbunden ist, wobei das mindestens einen Halteelement (8) auf der Oberseite des Armes angebracht ist, **dadurch gekennzeichnet, daß** eine Führung (7) für die Zahnseide als Vertiefung oder Nut innerhalb des Griffstücks (4) ausgebildet ist.

2. Zahnseidenhalter nach Anspruch 1, **dadurch gekennzeichnet, daß** das Griffstück (4) als Schalenkonstruktion ausgebildet ist.

3. Zahnseidenhalter nach Anspruch 1 oder 2, **dadurch gekennzeichnet, daß** die Länge des Armes etwa 0 bis etwa 7 cm beträgt.

4. Zahnseidenhalter nach einem der vorstehenden Ansprüche, **dadurch gekennzeichnet, daß** der Durchmesser des tropfenförmigen Grifftstücks (4) etwa 3 bis etwa 7 cm beträgt.

5. Zahnseidenhalter nach einem der vorstehenden Ansprüche, **dadurch gekennzeichnet, daß** die Zinken (3) der Gabel (2) einen Querschnitt von etwa 1 bis etwa 3 mm² aufweisen.

6. Zahnseidenhalter nach einem der vorstehenden Ansprüche, **dadurch gekennzeichnet, daß** die Zinken (3) der Gabel (2) gegenüber der Längsachse des Zahnseidenhalters nach unten und nach außen abgewinkelt sind.

7. Zahnseidenhalter nach einem der vorstehenden Ansprüche, **dadurch gekennzeichnet, daß** das Griffstück zwei Teile aufweist, wobei der erste Teil (4a) schalenförmig und der zweite Teil (4b) als lösbarer oder abklappbarer Deckel ausgebildet ist.

8. Zahnseidenhalter nach einem der vorstehenden Ansprüche, **dadurch gekennzeichnet, daß** im Griffstück (4) ein Stempel (10) ausgebildet ist, der sich im wesentlichen senkrecht zur Längsachse des Zahnseidenhalters erstreckt.

9. Zahnseidenhalter nach einem der vorstehenden Ansprüche, **dadurch gekennzeichnet, daß** das Griffstück mit einem federnd gelagerten Mechanismus (12) zur Arretierung versehen ist, wobei der Mechanismus (12) zur Arretierung einen Stempel (13) aufweist, der durch Druck zum Lösen der Arretierung betätigbar ist.

10. Zahnseidenhalter nach Anspruch 9, **dadurch gekennzeichnet, daß** die federnde Lagerung durch ein Federelement (15) verwirklicht ist und daß das Griffstück (4) Sicherungselemente (16) zum Verhindern des Herausspringens des Federelements (15) aufweist.

11. Zahnseidenhalter nach einem der vorstehenden Ansprüche, **dadurch gekennzeichnet, daß** er eine Schneidvorrichtung (11) zum Abschneiden der benutzten Zahnseide aufweist.

12. Zahnseidenhalter nach einem der vorstehenden Ansprüche, **dadurch gekennzeichnet, daß** er mit Mitteln versehen ist, um die Zahnseide in hochfrequente Schwingungen zu versetzen.

## Claims

1. A dental floss holder (1) comprising a handle member (4) into which a coil of floss can be inserted, a fork (2) with two tines (3) between which the floss can be stretched, and at least one holding element (8) for locking the floss, wherein the handle member (4) is substantially tear-shaped and is joined to the fork (2) by an arm (9), wherein the at least one holding element (8) is disposed on the top of the arm, **characterised in that** a guide (7) in the form of a recess or groove inside the handle member (4) is provided for the floss.

2. A dental floss holder according to claim 1, **characterised in that** the handle member (4) is constructed in the form of a dish.

3. A dental floss holder according to claim 1 or claim 2, **characterised in that** the length of the arm is about 0 to about 7 cm.

4. A dental floss holder according to any of the preceding claims, **characterised in that** the diameter of the tear-shaped handle member (4) is about 3 to about 7 cm.

5. A dental floss holder according to any of the preceding claims, **characterised in that** the tines (3) of the fork (2) have a cross-section of about 1 to about 3 mm².

6. A dental floss holder according to any of the preceding claims, **characterised in that** the tines (3) of the fork (2) are bent downwards and outwards relative to the longitudinal axis of the dental floss holder.

7. A dental floss holder according to any of the preceding claims, **characterised in that** the handle member has two parts, the first part (4a) being dish-shaped and the second part (4b) being in the form of a releasable or foldable lid.

8. A dental floss holder according to any of the preceding claims, **characterised in that** a punch (10) is formed in the handle member (4) and extends substantially at right angles to the longitudinal axis of the dental floss holder.

9. A dental floss holder according to any of the preceding claims, **characterised in that** the handle member has a resiliently mounted locking mechanism (12), wherein the locking mechanism (12) comprises a punch (13) actuated by pressure in order to release the lock.

10. A dental floss holder according to claim 9, **characterised in that** the resilient mounting is in the form of a spring element (15) and the handle member (4) has securing elements (16) for preventing the element (15) from springing out.

11. A dental floss holder according to any of the preceding claims, **characterised in that** it comprises a cutting device (11) for cutting off the used floss.

12. A dental floss holder according to any of the preceding claims, **characterised in that** it has means for vibrating the floss at high frequency.

## Revendications

1. Porte-fil dentaire (1) comportant un manche (4) dans lequel une bobine d'alimentation de fil dentaire peut être insérée, une fourche (2) avec deux fourchons (3) entre lesquels un fil dentaire peut être tendu, ainsi qu'au moins un élément de retenue (8) pour le blocage du fil dentaire, moyennant quoi le manche (4) est configuré sensiblement en forme de goutte et le manche (4) est raccordé à la fourche (2) par un bras (9), moyennant quoi le au moins un élément de retenue (8) est disposé sur la face supérieure du bras, **caractérisé en ce qu'**une glissière de guidage (7) est formée comme un creux ou une rainure à l'intérieur du manche (4) pour le fil dentaire.

2. Porte-fil dentaire selon la revendication 1, **caractérisé en ce que** le manche (4) est conçu comme une construction en cuvette.

3. Porte-fil dentaire selon la revendication 1 ou 2, **caractérisé en ce que** la longueur du bras est comprise entre environ 0 cm et environ 7 cm.

4. Porte-fil dentaire selon l'une quelconque des revendications précédentes, **caractérisé en ce que** le diamètre du manche en forme de goutte (4) est compris entre environ 3 cm et environ 7 cm.

5. Porte-fil dentaire selon l'une quelconque des revendications précédentes, **caractérisé en ce que** les fourchons (3) de la fourche (2) ont une section transversale comprise entre environ 1 mm² et environ 3 mm².

6. Porte-fil dentaire selon l'une quelconque des revendications précédentes, **caractérisé en ce que** les fourchons (3) de la fourche (2) sont coudés vers le bas et vers l'extérieur par rapport à l'axe longitudinal du porte-fil dentaire.

7. Porte-fil dentaire selon l'une quelconque des revendications précédentes, **caractérisé en ce que** le manche comporte deux parties, la première partie (4a) étant en forme de coque et la seconde partie (4b) étant conçue comme un couvercle détachable ou rabattable.

8. Porte-fil dentaire selon l'une quelconque des revendications précédentes, **caractérisé en ce qu'**un poinçon (10), qui s'étend sensiblement perpendiculairement à l'axe longitudinal du porte-fil dentaire, est formé dans le manche (4).

9. Porte-fil dentaire selon l'une quelconque des revendications précédentes, **caractérisé en ce que** le manche est muni d'un mécanisme (12) logé sur ressort pour le blocage, le mécanisme de blocage (12) comportant un poinçon (13) qui peut être actionné par pression pour desserrer le blocage.

10. Porte-fil dentaire selon la revendication 9, **caractérisé en ce que** le logement sur ressort est réalisé à l'aide d'un élément de ressort (15) et **en ce que** le manche (4) comporte des éléments de sécurité (16) pour éviter que l'élément de ressort (15) ne saute.

11. Porte-fil dentaire selon l'une quelconque des revendications précédentes, **caractérisé en ce qu'**il comporte un dispositif coupant (11) pour couper le fil dentaire utilisé.

12. Porte-fil dentaire selon l'une quelconque des revendications précédentes, **caractérisé en ce qu'**il est muni de moyens destinés à entraîner le fil dentaire en oscillations de haute fréquence.
